# EUROPEAN PATENT SPECIFICATION

(11) **EP 3 567 950 B1**
(45) Date of publication and mention of the grant of the patent: **21.12.2022**
(21) Application number: 17890817.4
(22) Date of filing: 18.11.2017
(51) Int. Cl.: H04W 72/04, H04L 5/00, H04W 72/08

(54) **RESOURCE POOL PROCESSING METHOD AND DEVICE AND STORAGE MEDIUM**
RESSOURCENPOOLVERARBEITUNGSVERFAHREN UND -VORRICHTUNG SOWIE SPEICHERMEDIUM
PROCÉDÉ ET DISPOSITIF DE TRAITEMENT DE GROUPE DE RESSOURCES, ET SUPPORT DE STOCKAGE

(30) Priority: 06.01.2017 CN 201710011436
(43) Date of publication of application: 13.11.2019
(73) Proprietor: ZTE Corporation, Shenzhen, Guangdong 518057 (CN)
(72) Inventor: LU, Zhaohua, Shenzhen, Guangdong 518057 (CN); CHEN, Yijian, Shenzhen, Guangdong 518057 (CN); LI, Yu Ngok, Shenzhen, Guangdong 518057 (CN); WU, Hao, Shenzhen, Guangdong 518057 (CN)
(74) Representative: Regimbeau
(86) International application number: PCT/CN2017/111770
(87) International publication number: WO 2018/126802

(56) References cited:
- EP-A1- 2 840 748
- WO-A1-2014/000205
- WO-A1-2015/143170
- WO-A1-2016/021929
- WO-A1-2016/060482
- WO-A1-2017/063122
- CN-A- 104 754 748
- CN-A- 105 338 548
- CN-A- 105 578 382
- CN-A- 106 060 947
- CN-A- 106 105 356
- HUAWE I: 'Consideration on ProSe Discovery Enhancement' 3GPP TSG-RAN WG3 #89, R3-151428 28 August 2015, XP051006602

## Description

### TECHNICAL FIELD

The present invention relates to the field of communications and, in particular, relates to a resource pool processing method and apparatus, and storage medium.

### BACKGROUND

The fifth generation (5G) mobile networks will meet diverse service requirements of people in various fields such as living, working, leisure and traffic. Even in scenarios with ultra-high traffic density, ultra-high connection density and an ultra-high mobility characteristic, such as dense residential area, office, stadium, outdoor gathering, subway, express way, high-speed rail and wide-area coverage, the 5G mobile networks may also provide a user with extreme service experience such as ultra-high definition video, virtual reality, augmented reality, cloud desktop and online game. At the same time, the 5G mobile networks will also penetrate into Internet of Things (IoT) and various industries, and deeply integrate with industrial facilities, medical instruments and vehicles. This effectively meets diverse service requirements of vertical industries such as industry, medical treatment and traffic, and truly implements "Internet of everything".

In design of 5G system, forward compatibility is an important principle. This principle requires all resources to be dynamically configured. For example, a Synchronization Channel (SCH), a Channel State Information-Reference Signal (CSI-RS), a Sounding Reference Signal (SRS) and a feedback channel are configured to be dynamic and aperiodic. However, the better the forward compatibility is, the more the control overhead is. This will lead to reduction of spectral efficiency of the system. Due to the scarcity of radio spectrum resources, the design of a wireless communication system without consideration of the control overhead is certainly unreasonable.

Hence, it is required to strike a compromise between the control overhead and the forward compatibility. For example, a common resource pool is configured for transmitting the SCH, the CSI-RS, the SRS, the feedback channel or a transmission resource for a particular service (such as a low-delay high-reliability service). The system uses a resource in the resource pool according to requirements. However, if some resources in the resource pool are not used, there is no existing effective mechanism for allocating these unused resources to other downlink or uplink data channels that require resources (rate matching).

No effective solution has been proposed to solve the problem of poor usage flexibility of the resource pool of the 5G system in the existing art.

In the same endeavour as that of the invention, patent publication EP 2 840 748 A1 discloses receiving indication information from base station according to usage of the resource pool, and adjusting configuration of the first resource pool according to the indication information.

### SUMMARY

The embodiments of the present invention provide a resource pool processing method and apparatus, and storage medium, to at least solve the problem of poor usage flexibility of a resource pool of a 5G generation mobile communication system in the existing art.

The invention is defined by the independent claims. Preferred embodiments are defined by the dependent claims.

According to an embodiment of the present invention, a resource pool processing method according to claim 1 is provided.

Optionally, before the step in which the state information is sent, the method further includes a following step: a sending manner of the state information is configured.

Optionally, the sending manner of the state information includes one of following manners: the state information is sent through a physical downlink control channel (PDCCH); the state information is sent through a channel or a signal on a resource in the resource pool; the state information is sent through a resource in a time slot of the PDCCH corresponding to a data channel affected by usage of the resource pool; the state information is sent through a resource in a time slot after a time slot of the PDCCH corresponding to the data channel affected by the usage of the resource pool; the state information is sent through a resource in a time slot of the data channel affected by the usage of the resource pool; the state information is sent through a resource in a time slot after a time slot of the data channel affected by the usage of the resource pool.

Optionally, when the state information is sent through the PDCCH, the method further includes a following step: the state information is sent through a number N of PDCCHs. N is an integer greater than or equal to 2.

Optionally, the sending manner of the state information includes a sending manner determined through feedback information from the second communication node.

Optionally, the sending manner of the state information includes one of following manners: if the PDCCH exists in a time-domain resource corresponding to the resource pool, the state information is sent through a resource on a symbol of the PDCCH; the state information is sent through a resource on a symbol after a symbol of the PDCCH.

Optionally, the state information describes resource usage of a partial resource collection in the resource pool.

According to the invention, the state information describes one of the following: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information includes a number M of levels of usage state information. M is an integer greater than or equal to 2.

Optionally, at least one of the M levels of usage state information is sent in at least one manner of a group consisting of a PCDDH for broadcast, a PCDDH for multicast and a high-level signaling.

Optionally, mapping exists between a modulation coding scheme used for a channel for sending the state information and a modulation coding scheme of a data channel affected by the resource pool.

Optionally, a beam used for a channel for sending the state information is the same as a beam used for a data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1.

Optionally, the A levels of signaling includes at least one of a group consisting of a high-level signaling and a Media Access Control (MAC) signaling.

Optionally, if A is greater than 1, dependency exists among the A levels of signaling. The dependency is used for indicating a relation between a resource pool configured through a first signaling in the A levels of signaling and a resource pool configured through a second signaling in the A levels of signaling.

According to another embodiment of the present invention, a resource pool processing method according to claim 7 is provided.

Optionally, the state information describes resource usage of a partial resource collection in the resource pool.

According to the invention, the state information describes one of the following: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information includes a number M of levels of usage state information. M is an integer greater than or equal to 2.

Optionally, mapping exists between a modulation coding scheme used for a channel for sending the state information and a modulation coding scheme of a data channel affected by the resource pool.

Optionally, a beam used for a channel for sending the state information is the same as a beam used for a data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1.

Optionally, the A levels of signaling includes at least one of a group consisting of a high-level signaling and a MAC signaling.

Optionally, if A is greater than 1, dependency exists among the A levels of signaling. The dependency is used for indicating a relation between a resource pool configured through a first signaling in the A levels of signaling and a resource pool configured through a second signaling in the A levels of signaling.

According to another embodiment of the present invention, a resource pool processing apparatus according to claim 11 is provided.

Optionally, the apparatus further includes a configuration module. The configuration module is configured to configure a sending manner of the state information before the state information is sent.

Optionally, the sending module includes one of a first sending unit, a second sending unit, a third sending unit, a forth sending unit, a fifth sending unit or a sixth sending unit. The first sending unit is configured to send the state information through a physical downlink control channel (PDCCH). The second sending unit is configured to send the state information through a channel or a signal on a resource in the resource pool. The third sending unit is configured to send the state information through a resource in a time slot of the PDCCH corresponding to a data channel affected by usage of the resource pool. The forth sending unit is configured to send the state information through a resource in a time slot after a time slot of the PDCCH corresponding to the data channel affected by the usage of the resource pool. The fifth sending unit is configured to send the state information through a resource in a time slot of the data channel affected by the usage of the resource pool. The sixth sending unit is configured to send the state information through a resource in a time slot after a time slot of the data channel affected by the usage of the resource pool.

Optionally, the first sending unit is further configured to send the state information through a number N of PDCCHs. N is an integer greater than or equal to 2.

Optionally, the sending module is further configured to determine a sending manner of the state information according to feedback information from the second communication node.

Optionally, the sending module includes a seventh sending unit or an eighth module. The seventh sending unit is configured to, if the PDCCH exists in a time-domain resource corresponding to the resource pool, send the state information through a resource on a symbol of the PDCCH. The eighth sending unit is configured to send the state information through a resource on a symbol after a symbol of the PDCCH.

According to another embodiment of the present invention, a resource pool processing apparatus according to claim 12 is provided.

Optionally, the state information describes resource usage of a partial resource collection in the resource pool.

According to the invention, the state information describes one of the following: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information comprises a number M of levels of usage state information. M is an integer greater than or equal to 2.

Optionally, mapping exists between a modulation coding scheme used for a channel for sending the state information and a modulation coding scheme of a data channel affected by the resource pool.

Optionally, a beam used for a channel for sending the state information is the same as a beam used for a data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1.

Optionally, the A levels of signaling includes at least one of a group consisting of a high-level signaling and a MAC signaling.

Optionally, if A is greater than 1, dependency exists among the A levels of signaling. The dependency is used for indicating a relation between a resource pool configured through a first signaling in the A levels of signaling and a resource pool configured through a second signaling in the A levels of signaling.

According to another embodiment of the present invention, a storage medium according to claim 13 is further provided.

Optionally, the storage medium is further configured to store program codes used for performing steps described below.

The state information of the resource pool is received, where the state information is identified by the X bits, X is an integer greater than or equal to 1, and the value of X is determined through the negotiation between the first communication node and the second communication node, or determined through the pre-configuration. A resource used for data transmission is determined according to the state information.

Through the present invention, the state information of the resource pool is generated. The state information is identified by X bits. X is an integer greater than or equal to 1, and the value of X is determined through the negotiation between the first communication node and the second communication node, or determined through the pre-configuration. Then the state information is sent. That is, the present invention implements sending of the state information of the resource pool to the second communication node, to enable the second communication node to determine the resource used for data transmission according to received state information. This effectively utilizes a part of the unused resources in the resource pool, and solves the problem of poor usage flexibility of the resource pool of the 5G system in the existing art. The effect of increasing the usage flexibility of the resource pool is achieved.

### DESCRIPTION OF DRAWINGS

The drawings described herein are used for providing a further understanding of the present invention and form a part of the application. The exemplary embodiments of the present invention and their description are used for interpreting the present invention and do not constitute improper limitations to the present invention. Among the drawings:
FIG. 1 is a flowchart of a resource pool processing method according to an embodiment of the present invention;
FIG. 2 is a first schematic diagram of a sending manner of usage information of a resource pool according to an embodiment of the present invention;
FIG. 3 is a second schematic diagram of a sending manner of usage information of a resource pool according to an embodiment of the present invention;
FIG. 4 is a third schematic diagram of a sending manner of usage information of a resource pool according to an embodiment of the present invention;
FIG. 5 is a forth schematic diagram of a sending manner of usage information of a resource pool according to an embodiment of the present invention;
FIG. 6 is a fifth schematic diagram of a sending manner of usage information of a resource pool according to an embodiment of the present invention;
FIG. 7 is a sixth schematic diagram of a sending manner of usage information of a resource pool according to an embodiment of the present invention;
FIG. 8 is a seventh schematic diagram of a sending manner of usage information of a resource pool according to an embodiment of the present invention;
FIG. 9 is a structural diagram of a resource pool processing apparatus according to an embodiment of the present invention;
FIG. 10 is a first structural diagram of a resource pool processing apparatus according to an embodiment of the present invention;
FIG. 11 is a second structural diagram of a resource pool processing apparatus according to an embodiment of the present invention;
FIG. 12 is a third structural diagram of a resource pool processing apparatus according to an embodiment of the present invention;
FIG. 13 is a flowchart of another resource pool processing method according to an embodiment of the present invention; and
FIG. 14 is a fourth structural diagram of a resource pool processing apparatus according to an embodiment of the present invention.

### DETAILED DESCRIPTION

The present invention will be described in detail in conjunction with the drawings and embodiments. It should be noted that the embodiments of the present invention and features of the embodiments may be arbitrarily combined with each other in case of no conflict.

It should be noted that the terms "first", "second" and so on in the specification, the claims and the above drawings of the present invention are used for distinguishing similar objects, rather than for describing a specific order or a sequence.

### Embodiment 1:

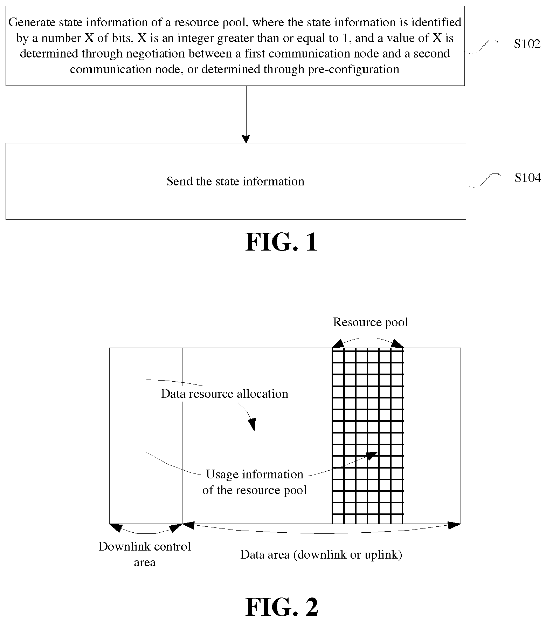

In this embodiment, a resource pool processing method is provided. FIG. 1 is a flowchart of the resource pool processing method according to the embodiment of the present invention. As shown in FIG. 1, the method includes steps described below.

In S102, state information of a resource pool is generated.

Optionally, the state information is used for describing usage information of the resource pool, such as used resources in the resource pool and unused resources in the resource pool.

It should be noted that the state information is identified by a number X of bits. X is an integer greater than or equal to 1, and the value of X is determined through negotiation between a first communication node and a second communication node, or determined through pre-configuration.

The first communication node includes, but is not limited to, a base station. The second communication node includes, but is not limited to, a terminal.

In S104, the state information is sent.

Optionally, in the embodiment, an application scenario of the above resource pool processing method includes, but is not limited to, the design of 5G system. In this application scenario, the state information of the resource pool is generated. The state information is identified by the X bits. X is an integer greater than or equal to 1, and the value of X is determined through the negotiation between the first communication node and the second communication node, or determined through the pre-configuration. Then the state information is sent. That is, the present invention implements sending of the state information of the resource pool to the second communication node, to enable the second communication node to determine a resource used for data transmission according to received state information. This effectively utilizes a part of the unused resources in the resource pool, and solves a problem of poor usage flexibility of a resource pool of a 5G system in the existing art. An effect of increasing the usage flexibility of the resource pool is achieved.

A specific example will be presented hereinafter to describe the embodiment.

A network-side equipment (including the base station) generates the usage information of the resource pool. Preferably, the usage information of the resource pool includes X bits. X is an integer greater than or equal to 1, and the value of X is determined through negotiation between the base station and the terminal, or determined through a standard pre-configuration. This is advantageous to increase flexibility of signaling and better meet a design requirement of "forward compatibility" of the 5G system.

The base station sends the usage information of the resource pool to the terminal.

In an optional implementation, before the step in which the state information is sent, the method further includes a following step: a sending manner of the state information is configured. Through the above method, the flexibility of signaling is increased and the design requirement of "forward compatibility" of the 5G system is better met.

A specific example will be presented hereinafter to describe the embodiment.

The network-side equipment (including the base station) generates the usage information of the resource pool. Preferably, the usage information of the resource pool includes X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

The base station sends the usage information of the resource pool to the terminal. Preferably, a sending manner of the usage information of the resource pool is configured to the terminal by the base station. In this way, the base station may select an appropriate sending manner, such as sending the usage information of the resource pool through a high-level signaling or a physical layer signaling, according to load of the system and capacity of the terminal.

In an optional implementation, the sending manner of the state information includes, but is not limited to, any one of manners described below.

The state information is sent through a physical downlink control channel (PDCCH). The state information is sent through a channel or signal on a resource in the resource pool. The state information is sent through a resource in a time slot of the PDCCH corresponding to a data channel affected by usage of the resource pool. The state information is sent through a resource in a time slot after the time slot of the PDCCH corresponding to the data channel affected by the usage of the resource pool. The state information is sent through a resource in a time slot of the data channel affected by the usage of the resource pool. The state information is sent through a resource in a time slot after the time slot of the data channel affected by the usage of the resource pool.

A specific example will be presented hereinafter to describe the embodiment.

The network-side equipment (including the base station) generates the usage information of the resource pool. Preferably, the usage information of the resource pool includes X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

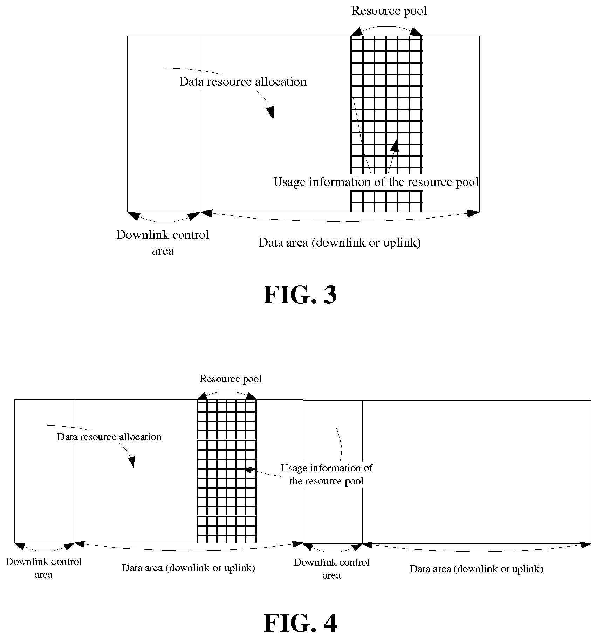

The base station sends the usage information of the resource pool to the terminal. Preferably, as shown in FIG. 2, the usage information of the resource pool is sent through the PDCCH, which may meet a requirement on real-time capability of signaling transmission. As shown in FIG. 3, the usage information of the resource pool is sent through the channel or signal on the resource in the resource pool. This design has a minimal impact on other channels, optimal forward compatibility and high flexibility. As shown in FIG. 2, the usage information of the resource pool is transmitted through the resource in the time slot of the PDCCH corresponding to the data channel affected by the usage of the resource pool. This is advantageous to enable the terminal to quickly acquire the impact of the resource in the resource pool on the resource used by the data channel. The usage information of the resource pool is transmitted through the resource in the time slot after the time slot of the PDCCH corresponding to the data channel affected by the usage of the resource pool. This is advantageous to have less impact on the data channel. As shown in FIG. 4, the usage information of the resource pool is transmitted through the resource in the time slot of the data channel affected by the usage of the resource pool. This may enable the terminal to quickly acquire the resource affected by the data channel. The usage information of the resource pool is transmitted through the resource in the time slot after the time slot of the data channel affected by the usage of the resource pool. This has a minimal impact on channel design.

Optionally, when the state information is sent through the PDCCH, the method further includes a following step: the state information is sent through a number N of PDCCHs. N is an integer greater than or equal to 2.

In an optional implementation, the sending manner of the state information includes, but is not limited to, a sending manner determined through feedback information from the second communication node.

In an optional implementation, the sending manner of the state information includes, but is not limited to, one of following manners: if the PDCCH exists in a time-domain resource corresponding to the resource pool, the state information is sent through a resource on a symbol of the PDCCH; the state information is sent through a resource on a symbol after a symbol of the PDCCH.

A specific example will be presented hereinafter to describe the embodiment.

The network-side equipment (including the base station) generates the usage information of the resource pool.

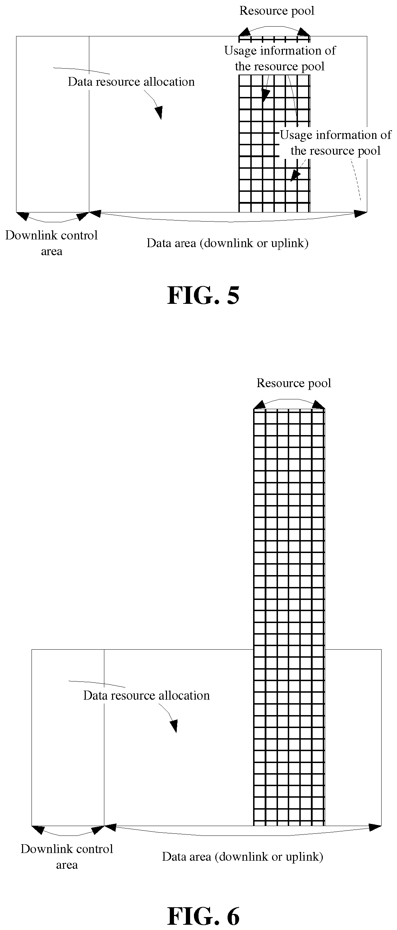

The base station sends the usage information of the resource pool to the terminal. Preferably, as shown in FIG. 5, if the PDCCH (such as a downlink control channel for a low-delay high-reliability service) exists in time-domain resources corresponding to the resource pool, the usage information of the resource pool is transmitted through the resource on the symbol of the PDCCH, or through the resource on the symbol after the symbol of the PDCCH. Preferably, the symbol may be an Orthogonal Frequency Division Multiplexing (OFDM) symbol.

Optionally, the above state information describes resource usage of a partial resource collection in the resource pool.

A specific example will be presented hereinafter to describe the present invention.

The network-side equipment (including the base station) generates the usage information of the resource pool. Preferably, the usage information of the resource pool describes the resource usage of the partial resource collection in the resource pool. As shown in FIG. 6, the resource pool includes ten basic resource units. The first four basic resource units of the ten basic resource units overlap with a resource used for the base station for sending data to the terminal, so the usage information of the resource pool only describes the usage of the first four basic resource units.

The base station sends the usage information of the resource pool to the terminal.

Optionally, the above state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

A specific example will be presented hereinafter to describe the embodiment.

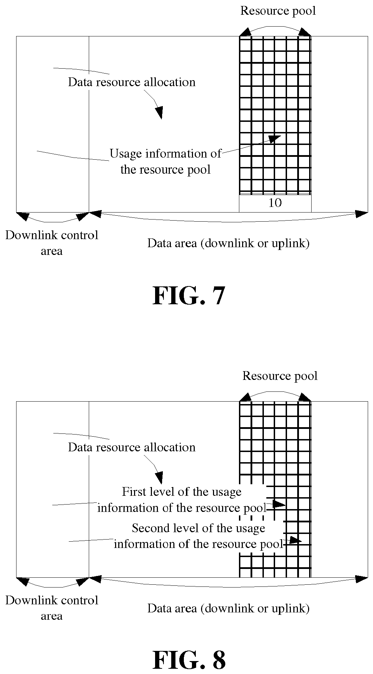

The network-side equipment (including the base station) generates the usage information of the resource pool. Preferably, the usage information of the resource pool describes whether the terminal receives data through the resource in the resource pool. As shown in FIG. 7, the resource pool includes ten basic resource units. The terminal may receive or send data through a basic resource unit labeled 10.

The base station sends the usage information of the resource pool to the terminal.

Optionally, the state information includes a number M of levels of usage state information. M is an integer greater than or equal to 2.

Optionally, at least one of the M levels of usage state information is sent in at least one of following manners: a PCDDH for broadcast, a PCDDH for multicast and a high-level signaling. The network-side equipment (including the base station) generates the usage information of the resource pool. Preferably, the usage information of the resource pool includes a number N of levels of the usage information. N is an integer greater than or equal to 2. As shown in FIG. 8, the resource pool includes ten basic resource units. The usage information of the resource pool is divided into two levels of the usage information. The first level of the usage information describes a location of usable basic resource units for the terminal (or a location of unusable basic resource units for the terminal) in the ten basic resource units. The second level of the usage information further describes usable resources in the basic resource units usable in the first level of the usage information. For example, the usable basic resource units include twelve subcarriers, and the terminal is informed which of the twelve subcarriers may be used for the terminal through the second level of the usage information. The base station sends the usage information of the resource pool to the terminal.

Optionally, mapping exists between a modulation coding scheme used for a channel for sending the state information and a modulation coding scheme of a data channel affected by the resource pool.

A specific example will be presented hereinafter to describe the embodiment.

The network-side equipment (including the base station) generates the usage information of the resource pool.

The base station sends the usage information of the resource pool to the terminal. Preferably, mapping exists between a modulation coding scheme used for the usage information of the resource pool and the modulation coding scheme of the data channel affected by the resource pool. For example, a modulation scheme used for the base station for sending downlink data to the terminal is 64 Quadrature Amplitude Modulation (64-QAM) and a resource used for the downlink data is affected by the resource in the resource pool, so that the modulation scheme of 64-QAM or 16-QAM is used for the usage information of the resource pool.

Optionally, a beam used for a channel for sending the state information is the same as a beam used for a data channel affected by the resource pool.

A specific example will be presented hereinafter to describe the embodiment.

The network-side equipment (including the base station) generates the usage information of the resource pool.

The base station sends the usage information of the resource pool to the terminal. Preferably, a sending beam used for the usage information of the resource pool is the same as a sending beam used for the data channel affected by the resource pool.

Optionally, the network-side equipment (including the base station) generates the usage information of the resource pool.

The base station sends the usage information of the resource pool to the terminal. Preferably, a receiving beam used for the usage information of the resource pool is the same as a receiving beam used for the data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1. The A levels of signaling includes at least one of a high-level signaling and a MAC signaling.

Optionally, if A is greater than 1, dependency exists among the A levels of signaling. The dependency is used for indicating a relation between a resource pool configured through a first signaling in the A levels of signaling and a resource pool configured through a second signaling in the A levels of signaling.

Compared with the existing art, the method and apparatus (system) described in the present invention solves the problem of poor usage flexibility of the resource pool of the 5G system, significantly increases usage efficiency of air interface resources and enhances performance of the 5G system.

Through the description of the above implementations, those skilled in the art may clearly understand that the method of the above embodiment may be implemented by means of software plus a necessary general hardware platform, or hardware of course; but in many cases, the former is a better implementation. Based on this understanding, the technical solution of the present invention may be embodied in a form of a software product in essence, or a part of the technical solution that contributes to the existing art may be embodied in a form of a software product. The computer software product is stored in a storage medium (such as a Read-Only Memory (ROM), a Random Access Memory (RAM), a magnetic disc or a compact disc). The computer software product includes several instructions for causing a terminal equipment (which may be a cellphone, a computer, a server, a network equipment, etc.) to execute the methods described in each embodiment of the present invention.

### Embodiment 2:

In this embodiment, a resource pool processing apparatus is further provided. The apparatus is used for implementing the above embodiment and preferable implementations. What has been described will not be repeated. As used below, the term "module" may be a combination of software and/or hardware for implementing a predefined function. Although the apparatus described in the following embodiment is preferably implemented by software, it is also possible be conceived that the apparatus described in the following embodiment is implemented by hardware, or a combination of software and hardware.

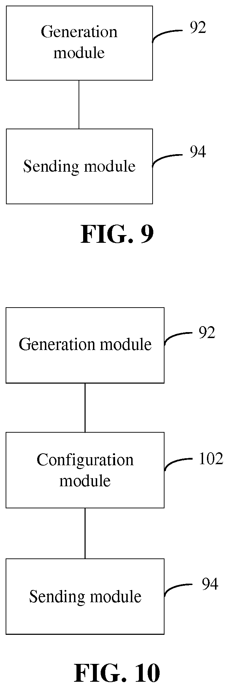

FIG. 9 is a structural diagram of the resource pool processing apparatus according to an embodiment of the present invention. As shown in FIG. 9, the apparatus includes a generation module 92 and a sending module 94.

The generation module 92 is configured to generate state information of a resource pool. The state information is identified by a number X of bits. X is an integer greater than or equal to 1, and the value of X is determined through negotiation between the first communication node and a second communication node, or determined through pre-configuration.

The sending module 94 is configured to send the state information.

Optionally, in the embodiment, an application scenario of the above resource pool processing apparatus includes, but is not limited to, the 5G system design. In this application scenario, the state information of the resource pool is generated. The state information is identified by the X bits. X is an integer greater than or equal to 1, and the value of X is determined through the negotiation between the first communication node and the second communication node, or determined through the pre-configuration. Then the state information is sent. That is, the embodiment of the present invention implements sending of the state information of the resource pool to the second communication node, to enable the second communication node to determine a resource used for data transmission according to received state information. This effectively utilizes a part of unused resources in the resource pool, and solves a problem of poor usage flexibility of a resource pool of a 5G system in the existing art. An effect of increasing the usage flexibility of the resource pool is achieved.

FIG. 10 is a first structural diagram of the resource pool processing apparatus according to an embodiment of the present invention. As shown in FIG. 10, the apparatus includes a configuration module 102 in addition to the modules shown in FIG. 9.

The configuration module 102 is configured to configure a sending manner of the state information before the state information is sent.

Through the apparatus shown in FIG. 10, the flexibility of signaling may be increased and a design requirement of "forward compatibility" of the 5G system may be better met.

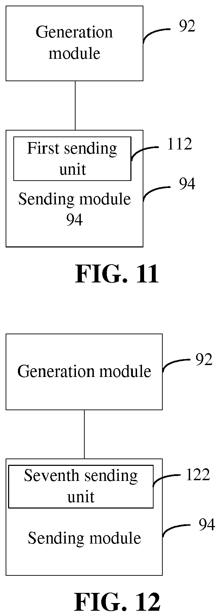

FIG. 11 is a second structural diagram of the resource pool processing apparatus according to the embodiment of the present invention. As shown in FIG. 11, the sending module 94 includes a first sending unit 112.

The first sending unit 112 is configured to send the state information through a physical downlink control channel (PDCCH).

Alternatively, the first sending unit 112 is equivalently substituted for a second sending unit, a third sending unit, a fourth sending unit, a fifth sending unit or a sixth sending unit. The second sending unit is configured to send the state information through a channel or signal on a resource in the resource pool. The third sending unit is configured to send the state information through a resource in a time slot of the PDCCH corresponding to a data channel affected by usage of the resource pool. The forth sending unit is configured to send the state information through a resource in a time slot after the time slot of the PDCCH corresponding to the data channel affected by the usage of the resource pool. The fifth sending unit is configured to send the state information through a resource in a time slot of the data channel affected by the usage of the resource pool. The sixth sending unit is configured to send the state information through a resource in a time slot after the time slot of the data channel affected by the usage of the resource pool.

Optionally, the first sending unit 112 is further configured to send the state information through a number N of PDCCHs. N is an integer greater than or equal to 2.

Optionally, the sending module 94 is further configured to determine a sending manner of the state information according to feedback information from the second communication node.

FIG. 12 is a third structural diagram of the resource pool processing apparatus according to an embodiment of the present invention. As shown in FIG. 12, the sending module 94 includes a seventh sending unit 122.

The seventh sending unit 122 is configured to, if a PDCCH exists in a time-domain resource corresponding to the resource pool, send the state information through a resource on a symbol of the PDCCH.

Alternatively, the seventh sending unit 122 is equivalently substituted for an eighth sending unit. The eighth sending unit is configured to send the state information through a resource on a symbol after the symbol of the PDCCH.

It should be noted that the above modules may be implemented by software or hardware. For the latter, the above modules may be implemented, but not limited to, by one of following manners: the above modules are all located in the same processor or located in separate processors in a form of arbitrary combinations.

### Embodiment 3:

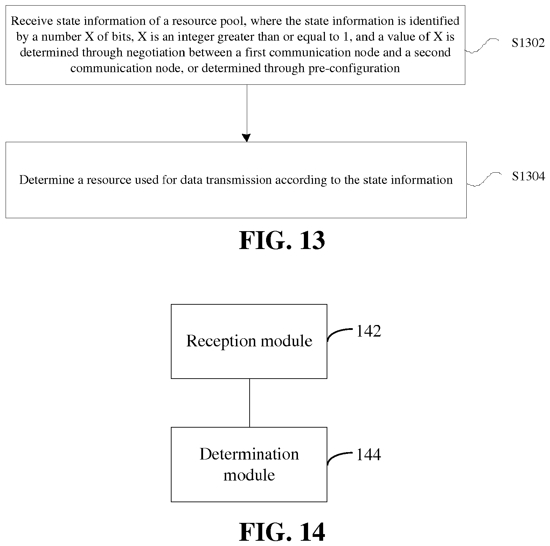

In this embodiment, a resource pool processing method is provided. FIG. 13 is a flowchart of another resource pool processing method according to an embodiment of the present invention. As shown in FIG. 13, the method includes steps described below.

In S1302, state information of a resource pool is received.

Optionally, the state information is used for describing usage information of the resource pool, such as used resources in the resource pool and unused resources in the resource pool.

It should be noted that the above state information is identified by a number X of bits. X is an integer greater than or equal to 1, and the value of X is determined through negotiation between a first communication node and a second communication node, or determined through pre-configuration.

The first communication node includes, but is not limited to, a base station. The second communication node includes, but is not limited to, a terminal.

In S1304, a resource used for data transmission is determined according to the state information. Optionally, in the embodiment, an application scenario of the above resource pool processing method includes, but is not limited to, the 5G system design. In this application scenario, the state information of the resource pool is received. The state information is identified by the X bits. X is an integer greater than or equal to 1, and the value of X is determined through the negotiation between the first communication node and the second communication node, or determined through the pre-configuration. The resource used for the data transmission is determined according to the state information. That is, the embodiment of the present invention implements sending of the state information of the resource pool to the second communication node, to enable the second communication node to determine the resource used for data transmission according to received state information. This effectively utilizes a part of the unused resources in the resource pool, and solves a problem of poor usage flexibility of a resource pool of a 5G system in the existing art. An effect of increasing the usage flexibility of the resource pool is achieved.

In an optional implementation, the state information describes resource usage of a partial resource collection in the resource pool.

Optionally, the state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner.

Optionally, the state information includes a number M of levels of usage state information. M is an integer greater than or equal to 2.

Optionally, mapping exists between a modulation coding scheme used for a channel for sending the state information and a modulation coding scheme of a data channel affected by the resource pool. A beam used for a channel for sending the state information is the same as a beam used for a data channel affected by the resource pool.

In an optional implementation, the resource pool is divided into a number Y of resource collections. Y is an integer greater than or equal to X. The resource pool is configured to the second communication node by the first communication node through a number A of levels of signaling. A is an integer greater than or equal to 1.

Optionally, the A levels of signaling includes at least one of a high-level signaling and a MAC signaling. If A is greater than 1, dependency exists among the A levels of signaling. The dependency is used for indicating a relation between a resource pool configured through a first signaling in the A levels of signaling and a resource pool configured through a second signaling in the A levels of signaling.

Different optional embodiments will be presented hereinafter to describe the embodiment in detail.

It should be noted that a main executor in the following optional embodiments is the terminal.

### Optional embodiment 1:

The terminal receives the usage information of the resource pool (through a physical layer signaling or a high-level signaling, such as a Radio Resource Control (RRC) signaling) from a network-side equipment (including the base station). Preferably, the usage information of the resource pool includes the X bits. X is an integer greater than or equal to 1, and the value of X is determined through negotiation between the base station and the terminal, or determined through a standard pre-configuration. This is advantageous to increase flexibility of signaling and better meet a design requirement of "forward compatibility" of the 5G system.

The terminal determines a resource used for receiving downlink data or sending uplink data according to the usage information of the resource pool.

### Optional embodiment 2:

The terminal receives the usage information of the resource pool from the network-side equipment (including the base station). Preferably, the usage information of the resource pool includes the X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

The terminal determines the resource used for receiving downlink data or sending uplink data according to the usage information of the resource pool.

Preferably, a sending manner of the usage information of the resource pool is configured to the terminal by the base station. In this way, the base station may select an appropriate sending manner, such as sending the usage information of the resource pool through a high-level signaling or a physical layer signaling, according to load of the system and capacity of the terminal.

### Optional embodiment 3:

The terminal receives the usage information of the resource pool from the network-side equipment (including the base station). Preferably, the usage information of the resource pool includes the X bits. X is an integer greater than or equal to 1, and the value of X is determined through the negotiation between the base station and the terminal, or determined through the standard pre-configuration. This is advantageous to increase the flexibility of signaling and better meet the design requirement of "forward compatibility" of the 5G system.

The terminal determines the resource used for receiving downlink data or sending uplink data according to the usage information of the resource pool.

Preferably, as shown in FIG. 2, the usage information of the resource pool is sent through a physical downlink control channel (PDCCH), which may meet a requirement on real-time capability of signaling transmission. As shown in FIG. 3, the usage information of the resource pool is sent through a channel or signal on a resource in the resource pool. This design has a minimal impact on other channels, optimal forward compatibility and high flexibility. As shown in FIG. 2, the usage information of the resource pool is transmitted through a resource in a time slot of the PDCCH corresponding to a data channel affected by the usage of the resource pool. This is advantageous to enable the terminal to quickly acquire the impact of the resource in the resource pool on the resource used by the data channel. The usage information of the resource pool is transmitted through a resource in a time slot after a time slot of the PDCCH corresponding to the data channel affected by the usage of the resource pool. This is advantageous to have less impact on the data channel. As shown in FIG. 4, the usage information of the resource pool is transmitted through a resource in a time slot of the PDCCH corresponding to the data channel affected by the usage of the resource pool. This may enable the terminal to quickly acquire the resource affected by the data channel. The usage information of the resource pool is transmitted through a resource in a time slot after a time slot of the PDCCH corresponding to the data channel affected by the usage of the resource pool. This has a minimal impact on channel design.

### Optional embodiment 4:

The terminal receives the usage information of the resource pool from the network-side equipment (including the base station). Preferably, the usage information of the resource pool describes the resource usage of the partial resource collection in the resource pool. As shown in FIG. 6, the resource pool includes ten basic resource units. The first four basic resource units of the ten basic resource units overlap with a resource used for the base station for sending data to the terminal, so the usage information of the resource pool only describes the usage of the first four basic resource units.

The terminal determines the resource used for receiving downlink data or sending uplink data according to the usage information of the resource pool.

### Optional embodiment 5:

The terminal receives the usage information of the resource pool from the network-side equipment (including the base station). Preferably, the usage information of the resource pool describes whether the terminal receives data through the resource in the resource pool. As shown in FIG. 7, the resource pool includes ten basic resource units. The terminal may receive or send data through a basic resource unit labeled 10.

The terminal determines the resource used for receiving downlink data or sending uplink data according to the usage information of the resource pool.

### Optional embodiment 6:

The terminal receives the usage information of the resource pool from the network-side equipment (including the base station). Preferably, the usage information of the resource pool includes a number N of levels of the usage information. N is an integer greater than or equal to 2. As shown in FIG. 8, the resource pool includes ten basic resource units. The usage information of the resource pool is divided into two levels of the usage information. The first level of the usage information describes a location of usable basic resource units for the terminal (or a location of unusable basic resource units for the terminal) in the ten basic resource units. The second level of the usage information further describes usable resources in the basic resource units usable in the first level of the usage information. For example, the usable basic resource units include twelve subcarriers, and the terminal is informed which of the twelve subcarriers may be used for the terminal through the second level of the usage information.

The terminal determines the resource used for receiving downlink data or sending uplink data according to the usage information of the resource pool.

### Optional embodiment 7:

The terminal receives the usage information of the resource pool from the network-side equipment (including the base station). Preferably, the usage information of the resource pool includes the N levels of the usage information. N is an integer greater than or equal to 2. At least one of the N levels of usage state information is sent through a PCDDH for broadcast, a PCDDH for multicast or a high-level signaling.

The terminal determines the resource used for receiving downlink data or sending uplink data according to the usage information of the resource pool.

### Optional embodiment 8:

The terminal receives the usage information of the resource pool from the network-side equipment (including the base station).

The terminal determines the resource used for receiving downlink data or sending uplink data according to the usage information of the resource pool.

Preferably, the state information of the resource pool is sent through a number N of PDCCHs. N is an integer greater than or equal to 1.

### Optional embodiment 9:

The terminal receives the usage information of the resource pool from the network-side equipment (including the base station).

Preferably, the resource pool is divided into a number Y of resource collections. Y is an integer greater than or equal to X.

The terminal determines the resource used for receiving downlink data or sending uplink data according to the usage information of the resource pool.

### Optional embodiment 10:

The terminal receives the usage information of the resource pool from the network-side equipment (including the base station).

The terminal determines the resource used for receiving downlink data or sending uplink data according to the usage information of the resource pool.

Preferably, as shown in FIG. 5, if the PDCCH (such as a downlink control channel for a low-delay high-reliability service) exists in time-domain resources corresponding to the resource pool, the usage information of the resource pool is transmitted through a resource on a symbol of the PDCCH, or through a resource on a symbol after a symbol of the PDCCH. Preferably, the symbol may be an Orthogonal Frequency Division Multiplexing (OFDM) symbol.

### Optional embodiment 11:

The terminal receives the usage information of the resource pool from the network-side equipment (including the base station).

The terminal determines the resource used for receiving downlink data or sending uplink data according to the usage information of the resource pool.

Preferably, mapping exists between a modulation coding scheme used for the usage information of the resource pool and the modulation coding scheme of the data channel affected by the resource pool. For example, a modulation scheme used for the base station for sending downlink data to the terminal is 64-QAM and a resource used for the downlink data is affected by the resource in the resource pool, so that the modulation scheme of 64-QAM or 16-QAM is used for the usage information of the resource pool.

### Optional embodiment 12:

The terminal receives the usage information of the resource pool from the network-side equipment (including the base station).

The terminal determines the resource used for receiving downlink data or sending uplink data according to the usage information of the resource pool.

Preferably, a sending beam used for the state information of the resource pool is the same as a sending beam used for the data channel affected by the resource pool.

### Optional embodiment 13:

The terminal receives the usage information of the resource pool from the network-side equipment (including the base station).

The terminal determines the resource used for receiving downlink data or sending uplink data according to the usage information of the resource pool.

Preferably, a receiving beam used for the state information of the resource pool is the same as a receiving beam used for the data channel affected by the resource pool.

### Optional embodiment 14:

The terminal receives the usage information of the resource pool from the network-side equipment (including the base station).

The terminal determines the resource used for receiving downlink data or sending uplink data according to the usage information of the resource pool.

Preferably, the sending manner of the usage information of the resource pool is notified by the terminal to the base station through feedback information.

Compared with the existing art, the method and apparatus (system) described in the present invention solves the problem of poor flexibility of the resource pool of the 5G system, significantly increases usage efficiency of air interface resources and enhances performance of the 5G system.

It should be noted that the receiving beam mentioned in the present invention includes at least one of a receiving port, a receiving resource, a reference signal sequence, a receiving pre-coding matrix (analog, digital and a mixed mode), a receiver algorithm and Quasi-Co-Location (QCL) information.

It should be noted that the sending beam mentioned in the present invention includes at least one of a sending port, a sending resource, a reference signal sequence, a sending pre-coding matrix (analog, digital and a mixed mode), a transmitter algorithm and QCL information.

It should be noted that the beam may be a resource (such as transmitter pre-coding, receiver pre-coding, an antenna port, an antenna weight vector and an antenna weight matrix). The sequence number of the beam may be replaced by a resource index, because the beam may be bound with some time-frequency code resources in transmission. The beam may also be a transmission (sending or reception) mode. The transmission mode may include Space Division Multiplexing (SDM), frequency/time domain diversity. The receiving beam refers to a beam of the receiver that does not need to be indicated, or a beam resource of the receiver indicated by the transmitter through the current reference signal and reference signals (or standard reference signals) reported by the antenna port and a user equipment (UE), and indicated by QCL of the antenna port.

Through the description of the above implementations, those skilled in the art may clearly understand that the method of the above embodiment may be implemented by means of software plus a necessary general hardware platform, or hardware of course; but in many cases, the former is a better implementation. Based on this understanding, the technical solution of the present invention may be embodied in a form of a software product in essence, or a part of the technical solution that contributes to the existing art may be embodied in a form of a software product. The computer software product is stored in a storage medium (such as a Read-Only Memory (ROM), a Random Access Memory (RAM), a magnetic disc or a compact disc). The computer software product includes several instructions for causing a terminal equipment (which may be a cellphone, a computer, a server, a network equipment, etc.) to execute the methods described in each embodiment of the present invention.

### Embodiment 4:

In this embodiment, a resource pool processing apparatus is further provided. The apparatus is used for implementing the above embodiments and preferable implementations. What has been described will not be repeated. As used below, the term "module" may implement a combination of preset functional software and/or hardware. Although the apparatus described in the following embodiment is preferably implemented by software, it is also possible be conceived that the apparatus described in the following embodiment is the implemented by hardware, or a combination of software and hardware.

FIG. 14 is a forth structural diagram of the resource pool processing apparatus according to an embodiment of the present invention. As shown in FIG. 14, the apparatus includes a reception module 142 and a determination module 144.

The reception module 142 is configured to receive state information of a resource pool. The state information is identified by a number X of bits. X is an integer greater than or equal to 1, and the value of X is determined through negotiation between a first communication node and the second communication node, or determined through pre-configuration.

The determination module 144 is configured to determine a resource used for data transmission according to the state information.

Optionally, the state information is used for describing usage information of the resource pool, such as used resources in the resource pool and unused resources in the resource pool.

The first communication node includes, but is not limited to, a base station. The second communication node includes, but is not limited to, a terminal.

Optionally, in the embodiment, an application scenario of the above resource pool processing apparatus includes, but is not limited to, the 5G system design. In this application scenario, the state information of the resource pool is received. The state information is identified by the X bits. X is an integer greater than or equal to 1, and the value of X is determined through the negotiation between the first communication node and the second communication node, or determined through the pre-configuration. The resource used for the data transmission according to the state information is determined. That is, the embodiment of the present invention implements sending of the state information of the resource pool to the second communication node, to enable the second communication node to determine the resource used for data transmission according to received state information. This effectively utilizes a part of the unused resources in the resource pool, and solves the problem of poor usage flexibility of the resource pool of a 5G system in the existing art. An effect of increasing the usage flexibility of the resource pool is achieved.

In an optional implementation, the state information describes resource usage of a partial resource collection in the resource pool.

In an another optional implementation, the state information describes one of the followings: whether the first communication node sends data through a resource in the resource pool; whether the second communication node receives data through a resource in the resource pool; whether the second communication node tries to receive data through a resource in the resource pool; whether the second communication node measures, through a resource in the resource pool, at least one of a channel, interference, a sending manner and a receiving manner. Optionally, the state information includes a number M of levels of usage state information. M is an integer greater than or equal to 2.

Optionally, mapping exists between a modulation coding scheme used for a channel for sending the state information and a modulation coding scheme of a data channel affected by the resource pool.

Optionally, a beam used for a channel for sending the state information is the same as a beam used for a data channel affected by the resource pool.

Optionally, the resource pool is divided into a number Y of resource collections. Y is an integer greater than or equal to X.

Optionally, the resource pool is configured to the second communication node by the first communication node through a number A of levels of signaling. A is an integer greater than or equal to 1. The A levels of signaling includes at least one of a high-level signaling and a MAC signaling. If A is greater than 1, dependency exists among the A levels of signaling. The dependency is used for indicating a relation between a resource pool configured through a first signaling in the A levels of signaling and a resource pool configured through a second signaling in the A levels of signaling.

It should be noted that the above modules may be implemented by software or hardware. For the latter, the above modules may be implemented, but not limited to, by one of following manners: the above modules are all located in the same processor or located in separate processors in a form of arbitrary combinations.

### Embodiment 5:

The present invention further provides a storage medium. Optionally, in this embodiment, the storage medium may be configured to store program codes used for performing steps described below.

In S1, state information of a resource pool is generated. The state information is identified by a number X of bits. X is an integer greater than or equal to 1, and the value of X is determined through negotiation between a first communication node and a second communication node, or determined through pre-configuration.

In S2, the state information is sent.

Optionally, the storage medium is further configured to store program codes used for performing steps described below.

In S3, the state information of the resource pool is received. The state information is identified by the X bits. X is an integer greater than or equal to 1, and the value of X is determined through the negotiation between the first communication node and the second communication node, or determined through the pre-configuration.

In S4, a resource used for data transmission is determined according to the state information. Optionally, in the embodiment, the above storage medium may include, but is not limited to, various media that may store the program codes, such as a universal serial bus (USB) flash disk, a Read-Only Memory (ROM), a Random Access Memory (RAM), a mobile hard disk, a magnetic disc or a compact disc.

Optionally, in the embodiment, a processor executes the above steps S1 and S2 according to stored program codes in the storage medium.

Optionally, in the embodiment, the processor executes the above steps S3 and S4 according to the stored program codes in the storage medium.

Optionally, specific examples of the embodiment may refer to the examples described in the above embodiments and the optional implementations, which will not be repeated here. Obviously, those skilled in the art should understand that the modules or steps of the above embodiments of the present invention may be implemented by a common computing device. The modules or steps may be concentrated on a single computing device or distributed on a network composed of multiple computing devices. Optionally, the modules or steps may be implemented by executable program codes of the computing device, so that they may be stored in a storage device and be executed by the computing device. Moreover, in some cases, the steps shown or described may be executed in a different order than here. The modules or steps may be implemented by fabricating them into respective integrated circuits, or by implementing multiple modules or steps into a single integrated circuit module. In this way, the present invention is not limited to a combination of any particular hardware and software, but is only limited in scope by the appended claims.

## Claims

1. A resource pool processing method, performed by a resource pool processing apparatus within a first wireless communication node, **characterized by** comprising:
generating (S102) state information of a resource pool, wherein the state information is identified by a number X of bits, X is an integer greater than or equal to 1, and a value of X is determined through negotiation between the first communication node and a second communication node; and
sending (S104) the state information;
wherein the state information describes whether the first communication node sends data through a resource in the resource pool; the state information describes whether the second communication node receives data through a resource in the resource pool; the state information describes whether the second communication node tries to receive data through a resource in the resource pool; or the state information describes whether the second communication node measures, through a resource in the resource pool, at least one of a channel, interference, a sending manner and a receiving manner.

2. The method of claim 1, wherein a sending manner of the state information comprises:
sending the state information through a physical downlink control channel, PDCCH;
sending the state information through a channel or a signal on a resource in the resource pool;
sending the state information through a resource in a time slot of the PDCCH corresponding to a data channel affected by usage of the resource pool;
sending the state information through a resource in a time slot after a time slot of the PDCCH corresponding to the data channel affected by the usage of the resource pool;
sending the state information through a resource in a time slot of the data channel affected by the usage of the resource pool; or
sending the state information through a resource in a time slot after a time slot of the data channel affected by the usage of the resource pool.

3. The method of claim 1, wherein
the resource pool is divided into a number Y of resource collections, wherein Y is an integer greater than or equal to X.

4. The method of claim 1, wherein
the resource pool is configured to the second communication node by the first communication node through a number A of levels of signaling, wherein A is an integer greater than or equal to 1.

5. The method of claim 4, wherein the A levels of signaling comprises at least one of a group consisting of:
a high-level signaling; and
a Media Access Control, MAC, signaling.

6. The method of claim 5, wherein in a case where A is greater than 1, dependency exists among the A levels of signaling, wherein the dependency is used for indicating a relation between a resource pool configured through a first signaling in the A levels of signaling and a resource pool configured through a second signaling in the A levels of signaling.

7. A resource pool processing method, performed by a resource pool processing apparatus within a second wireless communication node, **characterized by** comprising:
receiving (S1302) state information of a resource pool, wherein the state information is identified by a number X of bits, X is an integer greater than or equal to 1, and a value of X is determined through negotiation between a first communication node and the second communication node; and
determining (S1304) a resource used for data transmission according to the state information;
wherein the state information describes whether the first communication node sends data through a resource in the resource pool; the state information describes whether the second communication node receives data through a resource in the resource pool; the state information describes whether the second communication node tries to receive data through a resource in the resource pool; or the state information describes whether the second communication node measures, through a resource in the resource pool, at least one of a channel, interference, a sending manner and a receiving manner.

8. The method of claim 7, wherein
the resource pool is configured to the second communication node by the first communication node through a number A of levels of signaling, wherein A is an integer greater than or equal to 1.

9. The method of claim 8, wherein the A levels of signaling comprises at least one of a group consisting of:
a high-level signaling; and
a Media Access Control, MAC, signaling.

10. The method of claim 9, wherein in a case where A is greater than 1, dependency exists among the A levels of signaling, wherein the dependency is used for indicating a relation between a resource pool configured through a first signaling in the A levels of signaling and a resource pool configured through a second signaling in the A levels of signaling.

11. A resource pool processing apparatus, within a first wireless communication node,
**characterized by** comprising:
a generation module (92), which is configured to generate state information of a resource pool, wherein the state information is identified by a number X of bits, X is an integer greater than or equal to 1, and a value of X is determined through negotiation between the first communication node and a second communication node; and
a sending module (94), which is configured to send the state information;
wherein the state information describes whether the first communication node sends data through a resource in the resource pool; the state information describes whether the second communication node receives data through a resource in the resource pool; the state information describes whether the second communication node tries to receive data through a resource in the resource pool; or the state information describes whether the second communication node measures, through a resource in the resource pool, at least one of a channel, interference, a sending manner and a receiving manner.

12. A resource pool processing apparatus, within a second wireless communication node,
**characterized by** comprising:
a reception module (142), which is configured to receive state information of a resource pool, wherein the state information is identified by a number X of bits, X is an integer greater than or equal to 1, and a value of X is determined through negotiation between a first communication node and the second communication node; and
a determination module (144), which is configured to determine a resource used for data transmission according to the state information;
wherein the state information describes whether the first communication node sends data through a resource in the resource pool; the state information describes whether the second communication node receives data through a resource in the resource pool; the state information describes whether the second communication node tries to receive data through a resource in the resource pool; or the state information describes whether the second communication node measures, through a resource in the resource pool, at least one of a channel, interference, a sending manner and a receiving manner.

13. A storage medium, **characterized by** comprising instructions which, when executed by a computer of a resource pool processing apparatus within a first wireless communication node, cause said apparatus to perform the following steps:
generating state information of a resource pool, wherein the state information is identified by a number X of bits, X is an integer greater than or equal to 1, and a value of X is determined through negotiation between the first communication node and a second communication node; and
sending the state information;
wherein the state information describes whether the first communication node sends data through a resource in the resource pool; the state information describes whether the second communication node receives data through a resource in the resource pool; the state information describes whether the second communication node tries to receive data through a resource in the resource pool; or the state information describes whether the second communication node measures, through a resource in the resource pool, at least one of a channel, interference, a sending manner and a receiving manner.

## Patentansprüche

1. Ressourcenpoolverarbeitungsverfahren, das von einer Ressourcenpoolverarbeitungsvorrichtung in einem ersten drahtlosen Kommunikationsknoten durchgeführt wird, **dadurch gekennzeichnet, dass** es Folgendes umfasst:
Erzeugen (S102) von Zustandsinformationen eines Ressourcenpools, wobei die Zustandsinformationen durch eine Anzahl von X Bits identifiziert werden, X eine Ganzzahl größer als oder gleich 1 ist, und ein Wert von X durch eine Verhandlung zwischen dem ersten Kommunikationsknoten und einem zweiten Kommunikationsknoten bestimmt wird; und
Senden (S104) der Zustandsinformationen;
wobei die Zustandsinformationen beschreiben, ob der erste Kommunikationsknoten Daten über eine Ressource im Ressourcenpool sendet; die Zustandsinformationen beschreiben, ob der zweite Kommunikationsknoten Daten über eine Ressource im Ressourcenpool empfängt; die Zustandsinformationen beschreiben, ob der zweite Kommunikationsknoten versucht, Daten über eine Ressource im Ressourcenpool zu empfangen; oder die Zustandsinformationen beschreiben, ob der zweite Kommunikationsknoten über eine Ressource im Ressourcenpool mindestens eines von einem Kanal, einer Interferenz, einer Sendeweise und einer Empfangsweise misst.

2. Verfahren nach Anspruch 1, wobei eine Sendeweise der Zustandsinformationen Folgendes umfasst:
Senden der Zustandsinformationen über einen physischen Downlinksteuerkanal, PDCCH;
Senden der Zustandsinformationen über einen Kanal oder ein Signal auf einer Ressource im Ressourcenpool;
Senden der Zustandsinformationen über eine Ressource in einem Zeitschlitz des PDCCH, der einem Datenkanal entspricht, der durch eine Nutzung des Ressourcenpools beeinträchtigt wird;
Senden der Zustandsinformationen über eine Ressource in einem Zeitschlitz hinter einem Zeitschlitz des PDCCH, der dem Datenkanal entspricht, der durch die Nutzung des Ressourcenpools beeinträchtigt wird;
Senden der Zustandsinformationen über eine Ressource in einem Zeitschlitz des Datenkanals, der durch die Nutzung des Ressourcenpools beeinträchtigt wird; oder
Senden der Zustandsinformationen über eine Ressource in einem Zeitschlitz hinter einem Zeitschlitz des Datenkanals, der durch die Nutzung des Ressourcenpools beeinträchtigt wird.

3. Verfahren nach Anspruch 1, wobei
der Ressourcenpool in eine Anzahl von Y Ressourcensammlungen unterteilt ist, wobei Y eine Ganzzahl größer als oder gleich X ist.

4. Verfahren nach Anspruch 1, wobei
der Ressourcenpool durch den ersten Kommunikationsknoten über eine Anzahl von A Signalisierungsniveaus auf den zweiten Kommunikationsknoten ausgelegt ist, wobei A eine Ganzzahl größer als oder gleich 1 ist.

5. Verfahren nach Anspruch 4, wobei die A Signalisierungsniveaus mindestens eines von einer Gruppe umfassen, die aus Folgendem besteht:
einer Signalisierung eines hohen Niveaus; und
einer Medienzugangssteuerungs(MAC)-Signalisierung.

6. Verfahren nach Anspruch 5, wobei in einem Fall, in dem A größer als 1 ist, zwischen den A Signalisierungsniveaus eine Abhängigkeit besteht, wobei die Abhängigkeit zum Anzeigen einer Beziehung zwischen einem Ressourcenpool, der über eine erste Signalisierung in den A Signalisierungsniveaus ausgelegt ist, und einem Ressourcenpool, der über eine zweite Signalisierung in den A Signalisierungsniveaus ausgelegt ist, verwendet wird.

7. Ressourcenpoolverarbeitungsverfahren, das von einer Ressourcenpoolverarbeitungsvorrichtung in einem zweiten drahtlosen Kommunikationsknoten durchgeführt wird, **dadurch gekennzeichnet, dass** es Folgendes umfasst:
Empfangen (S1302) von Zustandsinformationen eines Ressourcenpools, wobei die Zustandsinformationen durch eine Anzahl von X Bits identifiziert werden, X eine Ganzzahl größer als oder gleich 1 ist und ein Wert von X durch eine Verhandlung zwischen einem ersten Kommunikationsknoten und dem zweiten Kommunikationsknoten bestimmt wird; und
Bestimmen (S1304) einer Ressource, die für eine Datenübertragung verwendet wird, gemäß den Zustandsinformationen;
wobei die Zustandsinformationen beschreiben, ob der erste Kommunikationsknoten Daten über eine Ressource im Ressourcenpool sendet; die Zustandsinformationen beschreiben, ob der zweite Kommunikationsknoten Daten über eine Ressource im Ressourcenpool empfängt; die Zustandsinformationen beschreiben, ob der zweite Kommunikationsknoten versucht, Daten über eine Ressource im Ressourcenpool zu empfangen; oder die Zustandsinformationen beschreiben, ob der zweite Kommunikationsknoten über eine Ressource im Ressourcenpool mindestens eines von einem Kanal, einer Interferenz, einer Sendeweise und einer Empfangsweise misst.

8. Verfahren nach Anspruch 7, wobei
der Ressourcenpool durch den ersten Kommunikationsknoten über eine Anzahl von A Signalisierungsniveaus auf den zweiten Kommunikationsknoten ausgelegt ist, wobei A eine Ganzzahl größer als oder gleich 1 ist.

9. Verfahren nach Anspruch 8, wobei die A Signalisierungsniveaus mindestens eines von einer Gruppe umfassen, die aus Folgendem besteht:
einer Signalisierung eines hohen Niveaus; und
einer Medienzugangssteuerungs(MAC)-Signalisierung.

10. Verfahren nach Anspruch 9, wobei in einem Fall, in dem A größer als 1 ist, zwischen den A Signalisierungsniveaus eine Abhängigkeit besteht, wobei die Abhängigkeit zum Anzeigen einer Beziehung zwischen einem Ressourcenpool, der über eine erste Signalisierung in den A Signalisierungsniveaus ausgelegt ist, und einem Ressourcenpool, der über eine zweite Signalisierung in den A Signalisierungsniveaus ausgelegt ist, verwendet wird.

11. Ressourcenpoolverarbeitungsvorrichtung in einem ersten drahtlosen Kommunikationsknoten, die **dadurch gekennzeichnet ist, dass** sie Folgendes umfasst:
ein Erzeugungsmodul (92), das dazu ausgelegt ist, Zustandsinformationen eines Ressourcenpools zu erzeugen, wobei die Zustandsinformationen durch eine Anzahl von X Bits identifiziert werden, X eine Ganzzahl größer als oder gleich 1 ist und ein Wert von X durch eine Verhandlung zwischen dem ersten Kommunikationsknoten und einem zweiten Kommunikationsknoten bestimmt wird; und
ein Sendemodul (94), das dazu ausgelegt ist, die Zustandsinformationen zu senden;
wobei die Zustandsinformationen beschreiben, ob der erste Kommunikationsknoten Daten über eine Ressource im Ressourcenpool sendet; die Zustandsinformationen beschreiben, ob der zweite Kommunikationsknoten Daten über eine Ressource im Ressourcenpool empfängt; die Zustandsinformationen beschreiben, ob der zweite Kommunikationsknoten versucht, Daten über eine Ressource im Ressourcenpool zu empfangen; oder die Zustandsinformationen beschreiben, ob der zweite Kommunikationsknoten über eine Ressource im Ressourcenpool mindestens eines von einem Kanal, einer Interferenz, einer Sendeweise und einer Empfangsweise misst.

12. Ressourcenpoolverarbeitungsvorrichtung in einem zweiten drahtlosen Kommunikationsknoten, die **dadurch gekennzeichnet ist, dass** sie Folgendes umfasst:
ein Empfangsmodul (142), das dazu ausgelegt ist, Zustandsinformationen eines Ressourcenpools zu empfangen, wobei die Zustandsinformationen durch eine Anzahl von X Bits identifiziert werden, X eine Ganzzahl größer als oder gleich 1 ist und ein Wert von X durch eine Verhandlung zwischen einem ersten Kommunikationsknoten und dem zweiten Kommunikationsknoten bestimmt wird; und
ein Bestimmungsmodul (144), das dazu ausgelegt ist, eine Ressource, die für eine Datenübertragung verwendet wird, gemäß den Zustandsinformationen zu bestimmen;
wobei die Zustandsinformationen beschreiben, ob der erste Kommunikationsknoten Daten über eine Ressource im Ressourcenpool sendet; die Zustandsinformationen beschreiben, ob der zweite Kommunikationsknoten Daten über eine Ressource im Ressourcenpool empfängt; die Zustandsinformationen beschreiben, ob der zweite Kommunikationsknoten versucht, Daten über eine Ressource im Ressourcenpool zu empfangen; oder die Zustandsinformationen beschreiben, ob der zweite Kommunikationsknoten über eine Ressource im Ressourcenpool mindestens eines von einem Kanal, einer Interferenz, einer Sendeweise und einer Empfangsweise misst.

13. Speichermedium, das **dadurch gekennzeichnet ist, dass** es Anweisungen umfasst, die, wenn sie von einem Computer einer Ressourcenpoolverarbeitungsvorrichtung in einem ersten drahtlosen Kommunikationsknoten ausgeführt werden, die Vorrichtung veranlassen, die folgenden Schritte durchzuführen:
Erzeugen von Zustandsinformationen eines Ressourcenpools, wobei die Zustandsinformationen durch eine Anzahl von X Bits identifiziert werden, X eine Ganzzahl größer als oder gleich 1 ist und ein Wert von X durch eine Verhandlung zwischen dem ersten Kommunikationsknoten und einem zweiten Kommunikationsknoten bestimmt wird; und
Senden der Zustandsinformationen;
wobei die Zustandsinformationen beschreiben, ob der erste Kommunikationsknoten Daten über eine Ressource im Ressourcenpool sendet; die Zustandsinformationen beschreiben, ob der zweite Kommunikationsknoten Daten über eine Ressource im Ressourcenpool empfängt; die Zustandsinformationen beschreiben, ob der zweite Kommunikationsknoten versucht, Daten über eine Ressource im Ressourcenpool zu empfangen; oder die Zustandsinformationen beschreiben, ob der zweite Kommunikationsknoten über eine Ressource im Ressourcenpool mindestens eines von einem Kanal, einer Interferenz, einer Sendeweise und einer Empfangsweise misst.

## Revendications

1. Procédé de traitement de réserve de ressources, réalisé par un appareil de traitement de réserve de ressources dans un premier nœud de communication sans fil, **caractérisé en ce qu'**il comprend :
de générer (S102) des informations d'état d'une réserve de ressources, dans lequel les informations d'état sont identifiées par un nombre X de bits, X est un nombre entier supérieur ou égal à 1, et une valeur de X est déterminée par négociation entre le premier nœud de communication et un deuxième nœud de communication ; et
d'envoyer (S104) les informations d'état ;
dans lequel les informations d'état décrivent si le premier nœud de communication envoie des données à travers une ressource de la réserve de ressources ; les informations d'état décrivent si le deuxième nœud de communication reçoit des données à travers une ressource de la réserve de ressources ; les informations d'état décrivent si le deuxième nœud de communication tente de recevoir des données à travers une ressource de la réserve de ressources ; ou les informations d'état décrivent si le deuxième nœud de communication mesure, à travers une ressource de la réserve de ressources, au moins un parmi un canal, une interférence, une manière d'envoyer et une manière de recevoir.

2. Procédé selon la revendication 1, dans lequel une manière d'envoyer des informations d'état comprend :
d'envoyer les informations d'état à travers un canal physique de contrôle de liaison descendante, PDCCH ;
d'envoyer les informations d'état à travers un canal ou un signal sur une ressource de la réserve de ressources ;
d'envoyer les informations d'état à travers une ressource dans une tranche de temps du PDCCH correspondant à un canal de données affecté par l'utilisation de la réserve de ressources ;
d'envoyer les informations d'état à travers une ressource dans une tranche de temps ultérieure à une tranche de temps du PDCCH correspondant au canal de données affecté par l'utilisation de la réserve de ressources ;
d'envoyer les informations d'état à travers une ressource dans une tranche de temps du canal de données affecté par l'utilisation de la réserve de ressources ; ou
d'envoyer les informations d'état à travers une ressource dans une tranche de temps ultérieure à une tranche de temps du canal de données affecté par l'utilisation de la réserve de ressources.

3. Procédé selon la revendication 1, dans lequel la réserve de ressources est divisée en un nombre Y de collectes de ressources, dans lequel Y est un nombre entier supérieur ou égal à X.

4. Procédé selon la revendication 1, dans lequel la réserve de ressources est configurée par le premier nœud de communication pour le deuxième nœud de communication à travers un nombre A de niveaux de signalisation, dans lequel A est un nombre entier supérieur ou égal à 1.

5. Procédé selon la revendication 4, dans lequel les A niveaux de signalisation comprennent au moins un élément d'un groupe constitué :
d'une signalisation de haut niveau ; et
d'une signalisation de contrôle d'accès au support, MAC.

6. Procédé selon la revendication 5, dans lequel dans le cas où A est supérieur à 1, une dépendance existe entre les A niveaux de signalisation, dans lequel la dépendance est utilisée pour indiquer une relation entre une réserve de ressources configurée par une première signalisation des A niveaux de signalisation et une réserve de ressources configurée par une deuxième signalisation des A niveaux de signalisation.

7. Procédé de traitement de réserve de ressources, réalisé par un appareil de traitement de réserve de ressources dans un deuxième nœud de communication sans fil, **caractérisé en ce qu'**il comprend
de recevoir (S1302) des informations d'état d'une réserve de ressources, dans lequel les informations d'état sont identifiées par un nombre X de bits, X est un nombre entier supérieur ou égal à 1, et une valeur de X est déterminée par négociation entre un premier nœud de communication et le deuxième nœud de communication ; et
de déterminer (S1304) une ressource utilisée pour la transmission de données selon les informations d'état ;
dans lequel les informations d'état décrivent si le premier nœud de communication envoie des données à travers une ressource de la réserve de ressources ; les informations d'état décrivent si le deuxième nœud de communication reçoit des données à travers une ressource de la réserve de ressources ; les informations d'état décrivent si le deuxième nœud de communication tente de recevoir des données à travers une ressource de la réserve de ressources ; ou les informations d'état décrivent si le deuxième nœud de communication mesure, à travers une ressource de la réserve de ressources, au moins un parmi un canal, une interférence, une manière d'envoyer et une manière de recevoir.

8. Procédé selon la revendication 7, dans lequel la réserve de ressources est configurée par le premier nœud de communication pour le deuxième nœud de communication à travers un nombre A de niveaux de signalisation, dans lequel A est un nombre entier supérieur ou égal à 1.

9. Procédé selon la revendication 8, dans lequel les A niveaux de signalisation comprennent au moins un élément d'un groupe constitué :
d'une signalisation de haut niveau ; et
d'une signalisation de contrôle d'accès au support, MAC.

10. Procédé selon la revendication 9, dans lequel dans le cas où A est supérieur à 1, une dépendance existe entre les A niveaux de signalisation, dans lequel la dépendance est utilisée pour indiquer une relation entre une réserve de ressources configurée par une première signalisation des A niveaux de signalisation et une réserve de ressources configurée par une deuxième signalisation des A niveaux de signalisation.

11. Appareil de traitement de réserve de ressources dans un premier nœud de communication sans fil,
**caractérisé en ce qu'**il comprend :
un module de génération (92), qui est configuré pour générer des informations d'état d'une réserve de ressources, dans lequel les informations d'état sont identifiées par un nombre X de bits, X est un nombre entier supérieur ou égal à 1, et une valeur de X est déterminée par négociation entre le premier nœud de communication et un deuxième nœud de communication ; et
un module d'envoi (94), qui est configuré pour envoyer les informations d'état ;
dans lequel les informations d'état décrivent si le premier nœud de communication envoie des données à travers une ressource de la réserve de ressources ; les informations d'état décrivent si le deuxième nœud de communication reçoit des données à travers une ressource de la réserve de ressources ; les informations d'état décrivent si le deuxième nœud de communication tente de recevoir des données à travers une ressource de la réserve de ressources ; ou les informations d'état décrivent si le deuxième nœud de communication mesure, à travers une ressource de la réserve de ressources au moins un parmi un canal, une interférence, une manière d'envoyer et une manière de recevoir.

12. Appareil de traitement de réserve de ressources dans un deuxième nœud de communication sans fil.
**caractérisé en ce qu'**il comprend :
un module de réception (142), qui est configuré pour recevoir des informations d'état d'une réserve de ressources, dans lequel les informations d'état sont identifiées par un nombre X de bits, X est un nombre entier supérieur ou égal à 1, et une valeur de X est déterminée par négociation entre un premier nœud de communication et le deuxième nœud de communication ; et
un module de détermination (144), qui est configuré pour déterminer une ressource utilisée pour la transmission de données selon les informations d'état ;
dans lequel les informations d'état décrivent si le premier nœud de communication envoie des données à travers une ressource de la réserve de ressources ; les informations d'état décrivent si le deuxième nœud de communication reçoit des données à travers une ressource de la réserve de ressources ; les informations d'état décrivent si le deuxième nœud de communication tente de recevoir des données à travers une ressource de la réserve de ressources ; ou les informations d'état décrivent si le deuxième nœud de communication mesure, à travers une ressource de la réserve de ressources, au moins un parmi un canal, une interférence, une manière d'envoyer et une manière de recevoir.

13. Support de stockage, **caractérisé en ce qu'**il comprend des instructions qui, lorsqu'elles sont exécutées par un ordinateur d'un appareil de traitement de réserve de ressources dans un premier nœud de communication sans fil, amènent ledit appareil à réaliser les étapes suivantes :
générer des informations d'état d'une réserve de ressources, dans lequel les informations d'état sont identifiées par un nombre X de bits, X est un nombre entier supérieur ou égal à 1, et une valeur de X est déterminée par négociation entre le premier nœud de communication et un deuxième nœud de communication ; et
envoyer les informations d'état ;
dans lequel les informations d'état décrivent si le premier nœud de communication envoie des données à travers une ressource de la réserve de ressources ; les informations d'état décrivent si le deuxième nœud de communication reçoit des données à travers une ressource de la réserve de ressources ; les informations d'état décrivent si le deuxième nœud de communication tente de recevoir des données à travers une ressource de la réserve de ressources ; ou les informations d'état décrivent si le deuxième nœud de communication mesure, à travers une ressource de la réserve de ressources, au moins un parmi un canal, une interférence, une manière d'envoyer et une manière de recevoir.
